# EUROPÄISCHE PATENTANMELDUNG

(11) **EP 1 394 013 A2**
(43) Veröffentlichungstag der Anmeldung: **03.03.2004**
(21) Anmeldenummer: 03017916.2
(22) Anmeldetag: 06.08.2003
(51) Int. Cl.: B62D 5/04, F16H 1/00

(54) **Spielfreies Planetenradgetriebe**

(30) Priorität: 30.08.2002 DE 10239968
(71) Anmelder: ZF Lenksysteme GmbH, 73527 Schwäbisch Gmünd (DE)
(72) Erfinder: Eisenhuth, Andreas, 73529 Schwäbisch Gmünd (DE)

(57) **Zusammenfassung**

Die Erfindung betrifft ein spielfreies Planetenradgetriebe 1, insbesondere für eine Lenkung eines Fahrzeugs, mit einer ersten Welle 2 auf der zwei schrägverzahnte Stirnrad-Planetenräder 3, 4 festgelegt sind. Eine zweite Welle 5 trägt ebenfalls zwei schrägverzahnte Stirnrad-Planetenräder 6, 7. Die Wellen 2, 5 sind parallel um Zahnräder 8, 9 angeordnet, die drehfest mit einer Lenkeingangswelle 17, bzw. Lenkausgangswelle 18 verbunden sind, wobei die Planetenräder mit den Zahnrädern kämmen. Zur Spielfreistellung des Planetenradgetriebes 1 sind die Wellen 2, 5 in entgegengesetzter Richtung zueinander axial vorgespannt.

## Beschreibung

Die Erfindung betrifft ein spielfreies Planetenradgetriebe, insbesondere für eine Lenkung eines Fahrzeugs nach dem Oberbegriff des Anspruchs 1.

Aus der DE 197 23 358 A 1 ist ein motorbetriebenes Servolenksystem für Fahrzeuge mit einem Überlagerungsgetriebe zur überlagerten Drehwinkelübertragung von zwei von einem Lenkrad oder Servomotor beaufschlagten Getriebeeingängen auf einen ein Lenkgetriebe beaufschlagenden Getriebeausgang bekannt. Das Überlagerungsgetriebe weist eine den Getriebeausgang bildende Sonnenradnabe, eine den ersten Getriebeeingang bildende Sonnenradhülse und einen den zweiten Getriebeeingang bildenden Planetenradträger auf, die konzentrisch zueinander angeordnet sind. Von den Planetenrädern des Planetenradträgers sind jeweils zwei miteinander drehfest verbunden und koaxial um eine im Planetenradträger festgelegte Achse drehbar und im ständigen Eingriff mit der Sonnenradachse und der Sonnenradhülse angeordnet.

Bei Zahnradgetrieben, wie Planetenradgetrieben, treten herstellungsbedingte Toleranzen, wie Zahndickenabmaß, Flankenformfehler, Rundlauffehler, Teilungsfehler und Achsabstandsabweichungen auf. Zwischen den Flanken der Zahnräder ist, um Klemmen zu vermeiden, ein Spiel vorhanden.

Dieses Zahnflankenspiel ist bei Fahrzeuglenkungen störend, da in diesem Anwendungsfall Spielfreiheit in beide Drehrichtungen erforderlich ist.

Ein Planetenradgetriebe, welches Spielfreiheit der Verzahnungen ermöglicht, ist aus der DE 197 12 516 A1 bekannt. Dabei sind Planetenräder und mit diesen kämmende Sonnenräder mit als konische Stirnräder, mit über die Zahnbreite stetig verändernder Profilverschiebung ausgebildet und auf ihren Wellen axial verschieblich angeordnet. Die Zahnräder des Planetenradgetriebes werden mittels Tellerfedern gegeneinander gepresst.

Ein solches Planetenradgetriebe ist aufwändig und nicht kostengünstig darstellbar.

Der DE 100 36 937 A1 ist ein spielfreies Planetenradgetriebe mit zumindest zwei Stufenplaneten mit schrägverzahnten Planetenrädern entnehmbar. Die Planetenräder sind mit Zahnrädern des Planetenradgetriebes in verzahntem Eingriff. Zur Vermeidung von Spiel in der Verzahnung zwischen den Planetenrädern und den Zahnrädern ist mindestens ein Stufenplanet drehelastisch ausgeführt und in vorgespanntem Zustand in dem Planetenradgetriebe eingebaut. Zur Darstellung von Spielfreiheit bedarf es bei diesem Planetenradgetriebe verschiedenartig gestalteter Stufenplaneten und einer speziellen Montageweise des Getriebes.

Der Erfindung liegt die Aufgabe zugrunde, ein Planetenradgetriebe der gattungsgemäßen Art so weiterzubilden, dass bei kostengünstiger Herstellung auf einfache Weise Spielfreiheit des Planetenradgetriebes ermöglicht ist.

Die Aufgabe wird mit einem Planetenradgetriebe mit den Merkmalen des Anspruchs 1 gelöst.

Dadurch, dass ein Planetenradgetriebe geschaffen ist, welches eine erste Welle mit zwei darauf mit Abstand festgelegten, schrägverzahnten Stirnrad-Planetenrädern und eine zweite Welle mit gleichen Planetenrädern aufweist, wobei die Wellen koaxial um Zahnräder angeordnet sind, mit denen die Planetenräder in Eingriff sind und in entgegengesetzter Richtung zueinander angefedert sind, ist auf einfache Weise Spielfreiheit des Planetenradgetriebes bewirkt. Die Wellen haben immer denselben radialen Abstand zu den Zahnrädern, wodurch anders als bei radialer Anfederung der Planetenräder oder deren Wellen kein Taumeln der Planetenräder, kein Taumeln eines die Planetenräder führenden Schraubenrades oder ein spielbehaftetes freies Mitlaufen von nicht angefederten Planetenrädern möglich ist. Stochastische Geräusche des Planetenradgetriebes sind dadurch ausgeschlossen.

Durch die Anfederung oder Vorspannung der beiden Wellen in entgegengesetzte Richtungen ist das Planetenradgetriebe als Ganzes spielfrei verspannt.

Bevorzugt bilden die Planetenräder mit den Wellen Stufenplaneten, die identisch sind und kostengünstig und in bekannter Weise zu fertigen sind.

Es kann zweckmäßig sein, in dem Planetenradgetriebe eine dritte Welle mit zwei weiteren schrägverzahnten Planetenrädern anzuordnen und die Wellen koaxial mit gleichem oder unterschiedlichem Winkelmaß zueinander anzuordnen.

Jeweils ein Planetenrad einer jeden Welle kämmt mit einem ersten Sonnenrad, das bevorzugt mit einer Lenkeingangswelle drehfest verbunden ist und jeweils ein Planetenrad kämmt mit einem zweiten Sonnenrad, das drehfest mit einer Lenkausgangswelle verbunden ist.
Der Schrägungswinkel der Verzahnungen ist so gewählt, dass bei geringer axialer Verschiebung der Wellen gegeneinander das Zahnflankenspiel aufgebraucht ist. Die Steigungen der beiden Verzahnungen ist dabei unterschiedlich. Die Verzahnungsachsen bleiben unverändert.

Die Lenkausgangswelle ist bevorzugt drehfest mit einem Ritzel eines Zahnstangen-Lenkgetriebes verbunden. Das Planetenradgetriebe kann Teil einer Hydro-Zahnstangenlenkung sein und auch als Überlagerungsgetriebe ausgebildet sein.

Zu diesem Zweck weist das Planetenradgetriebe ein Gestell oder einen Planetenradträger auf, das um eine zu den Wellen der Planetenräder parallele Achse drehbar ist. Das Gestell ist bevorzugt von einem Elektromotor angetrieben.

Ein Ausführungsbeispiel der Erfindung ist nachfolgend anhand der Zeichnung gezeigt. In der Zeichnung zeigt:
- Fig. 1: einen teilweisen Längsschnitt mit Ansicht eines Planetenradgetriebes,
- Fig. 2: einen Querschnitt durch das Planetenradgetriebe entlang der Linie II - II in Fig. 1.

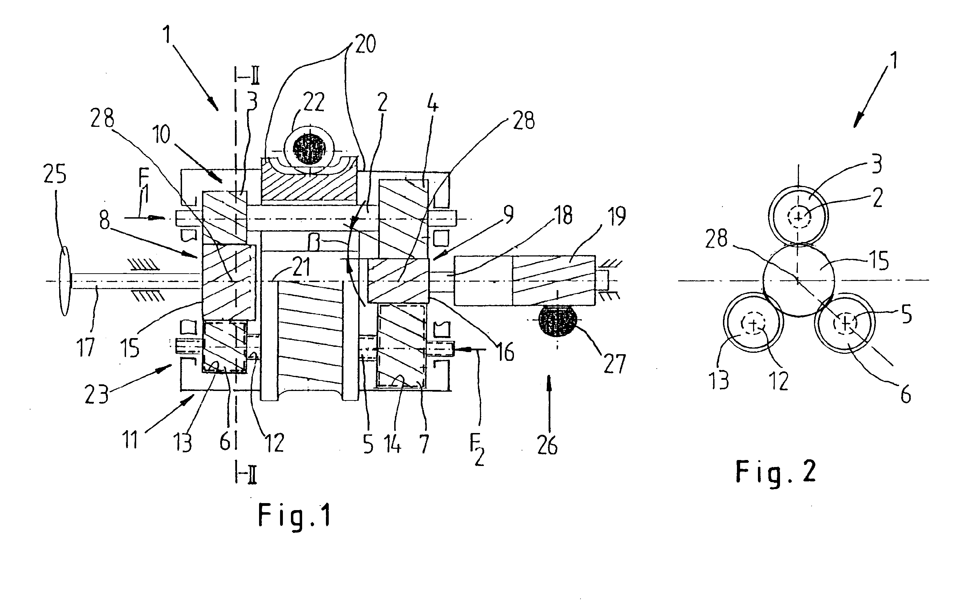

In Fig. 1 ist in einem teilweisen schematischen Längsschnitt ein Planetenradgetriebe 1 in einer Zahnstangen-Hydrolenkung eines Kraftfahrzeugs gezeigt. In einem als Planetenradträger ausgebildeten Gestell 20 sind Stufenplaneten 10, 11 über Wälzlager gelagert und gehalten. Die Stufenplaneten 10, 11 haben gleichen Winkelabstand zu einem weiteren Stufenplaneten 23 und sind annähernd identisch aufgebaut.

Dazu ist auf jeweils einer Welle 2, 5 und 12 mit axialem Abstand zueinander jeweils ein Planetenrad 3, 4, 6, 7, 13, 14 auf den Wellen festgelegt.

Die Planetenräder 3, 6 und 13 kämmen mit ihren Schrägverzahnungen mit einem Zahnrad 8, einem ersten Sonnenrad 15, das drehfest über eine Lenkeingangswelle 17 mit einer Lenkhandhabe 25 verbunden ist.

Abtriebsseitig weist das Planetenradgetriebe 1 ein zweites Zahnrad 9, ein Sonnenrad 16 auf, das drehfest mit einem Ritzel 19 über eine Lenkausgangswelle 18 verbunden ist. Mit dem zweiten Zahnrad 9 kämmen die Planetenräder 4,7 und 14, wobei die Verzahnungen der Planetenräder 3, 6 und 13 andere Steigungen haben als die Verzahnungen der Planetenräder 4, 7 und 14. Das Ritzel 19 ist Teil eines Zahnstangen-Lenkgetriebes 26 und kämmt mit einer Zahnstange 27. Die Zahnstange 27 ist in bekannter Weise über Spurstangen und Radlenkhebel mit lenkbaren Rädern des Fahrzeugs gelenkig verbunden.

Der Schrägungswinkel β der Verzahnungen der Planeten- und Sonnenräder ist so gewählt, dass bei einer geringen axialen Verschiebung der Planetenräder 3, 4, 6, 7, 13, 14 gegen die Sonnenräder 15, 16 das Zahnflankenspiel aufgebraucht ist.

Die erste Welle 2 ist zur Spielfreistellung des Planetenradgetriebes 1 in Pfeilrichtung F₁ vorgespannt. In entgegengesetzter Richtung zu F₁ ist die zweite Welle 5 in Pfeilrichtung F₂ vorgespannt. Die axiale Vorspannung der Wellen 2, 5 kann über Federelemente aus Stahl, einem Elastomeren oder mit Hilfe von Magneten und anderen, eine Vorspannung erzeugenden Vorrichtungen oder Maschinenelementen erfolgen. Auf diese Weise ist ein geräuscharmer Betrieb und Spielfreiheit des Planetenradgetriebes bei einfachem Aufbau gewährleistet.

In dem in den Figuren 1 und 2 gezeigten Ausführungsbeispiel ist das Planetenradgetriebe 1 als Überlagerungsgetriebe ausgebildet, wobei die Wellen 2, 5 und 12 in einem Gestell 20, das als Planetenradträger ausgebildet ist, gelagert sind. Zur additiven Verknüpfung einer Drehbewegung an der Lenkhandhabe 25 mit Stellwegen eines als Elektromotor 22 ausgebildeten Aktuators lässt sich das Gestell 20 um eine mit der Längsmittelachse 28 der Sonnenräder 15, 16 kongruenten Achse 21 drehen.

### BEZUGSZEICHENLISTE

- 1: Planetenradgetriebe
- 2: Welle, erste
- 3: Planetenrad
- 4: Planetenrad
- 5: Welle, zweite
- 6: Planetenrad
- 7: Planetenrad
- 8: Zahnrad
- 9: Zahnrad
- 10: Stufenplanet
- 11: Stufenplanet
- 12: Welle, dritte
- 13: Planetenrad
- 14: Planetenrad
- 15: Sonnenrad, erstes
- 16: Sonnenrad, zweites
- 17: Lenkeingangswelle
- 18: Lenkausgangswelle
- 19: Ritzel
- 20: Gestell
- 21: Achse
- 22: Elektromotor
- 23: Stufenplanet

- 25: Lenkhandhabe
- 26: Zahnstangenlenkgetriebe
- 27: Zahnstange
- 28: Längsmittelachse
- β: Schrägungswinkel
- F₁: Pfeil
- F₂: Pfeil

## Patentansprüche

1. Spielfreies Planetenradgetriebe, insbesondere für eine Lenkung eines Fahrzeugs, mit einer ersten Welle (2), auf der zwei schrägverzahnte Stirnrad-Planetenräder (3, 4) festgelegt sind, und mit einer zweiten Welle (5), auf der zwei schrägverzahnte Stirnrad-Planetenräder (6, 7) festgelegt sind, wobei die Planetenräder (3, 4, 6, 7) mit Zahnrädern (8, 9) des Planetenradgetriebes (1) in Eingriff sind, **dadurch gekennzeichnet, dass** eine Welle (2, 5) in Axialrichtung vorgespannt ist.

2. Spielfreies Planetenradgetriebe nach Anspruch 1, **dadurch gekennzeichnet, dass** die erste Welle (2) in entgegengesetzter Richtung wie die zweite Welle (5) axial vorgespannt ist.

3. Spielfreies Planetenradgetriebe nach Anspruch 1 oder 2, **dadurch gekennzeichnet, dass** die Verzahnungen der Stirnrad-Panetenräder (3, 4, 6, 7) unterschiedliche Steigungen aufweisen.

4. Spielfreies Planetenradgetriebe nach einem der vorangehenden Ansprüche, **dadurch gekennzeichnet, dass** die Planetenräder (3, 4, 6, 7) mit den Wellen (2, 5) Stufenplaneten (10, 11) bilden.

5. Spielfreies Planetenradgetriebe nach einem der Ansprüche 1 bis 4, **dadurch gekennzeichnet, dass** zwei weitere Planetenräder (13, 14) auf einer dritten Welle (12) in Eingriff mit den Zahnrädern (8, 9) sind.

6. Spielfreies Planetenradgetriebe nach einem der Ansprüche 1 bis 5, **dadurch gekennzeichnet, dass** jeweils ein Planetenrad (3, 6, 13) der Wellen (2, 5, 12) mit einem ersten Sonnenrad (15) und jeweils ein Planetenrad (4, 7, 14) der Wellen (2, 5, 12) mit einem zweiten Sonnenrad (16) kämmt.

7. Spielfreies Planetenradgetriebe nach einem der Ansprüche 1 bis 6, **dadurch gekennzeichnet, dass** der Schrägungswinkel (β) der Verzahnung der Planetenräder (3, 4, 6, 7, 13, 14) so gewählt ist, dass eine geringe axiale Verschiebung der Wellen (2, 5, 12) zu einem Aufbrauch des Zahnflankenspiels führt.

8. Spielfreies Planetenradgetriebe nach Anspruch 6 oder 7, **dadurch gekennzeichnet, dass** das erste Sonnenrad (15) drehfest mit einer Lenkeingangswelle (17) und das zweite Sonnenrad (16) drehfest mit einer Lenkausgangswelle (18) verbunden ist.

9. Spielfreies Planetenradgetriebe nach Anspruch 8, **dadurch gekennzeichnet, dass** die Lenkausgangswelle (18) drehfest mit einem Ritzel (19) eines Zahnstangen-Lenkgetriebes (26) verbunden ist.

10. Spielfreies Planetenradgetriebe nach einem der Ansprüche 1 bis 9, **dadurch gekennzeichnet, dass** das Planetenradgetriebe (1) Teil einer Zahnstangen-Hydrolenkung ist.

11. Spielfreies Planetenradgetriebe nach einem der Ansprüche 1 bis 10, **dadurch gekennzeichnet, dass** die Wellen (2, 5, 12) in einem Gestell (20) geführt sind und das Gestell (20) um eine zu den Wellen (2, 5, 12) parallele Achse (21) drehbar gelagert ist.

12. Spielfreies Planetenradgetriebe nach Anspruch 11, **dadurch gekennzeichnet, dass** das Gestell (20) von einem Elektromotor (22) drehbar betätigt ist.

13. Spielfreies Planetenradgetriebe nach einem der vorangehenden Ansprüche, **dadurch gekennzeichnet, dass** die Stirnrad-Planetenräder (3, 4, 6, 7) und die Zahnräder (8, 9) nicht konisch ausgebildet sind.
